# EUROPEAN PATENT APPLICATION

(11) **EP 4 495 895 A1**
(43) Date of publication of application: **22.01.2025**
(21) Application number: 23186539.5
(22) Date of filing: 19.07.2023
(51) Int. Cl.: G06V 10/82, G06V 20/10

(54) **A METHOD OF IDENTIFYING A SPECIFIC GROUP OF OBJECTS ON REMOTE SENSING RASTER IMAGE DATA**

(71) Applicant: Centorium sp. z o.o., 00-672 Warszawa mazowieckie (PL)
(72) Inventor: Chachulski, Mateusz, 04-010 Warszawa (PL); Piszczatowska, Anna, 02-776 Warszawa (PL); Urbanowicz, Daniel, 05-530 Cenadrowice (PL)
(74) Representative: Galazkiewicz, Wlodzimierz

(57) **Abstract**

A method for identifying a specific group of objects using a computer system equipped with memory, a computing unit, input-output devices, a display screen, and an operating system installed in the memory adapted for processing graphic files and launching artificial intelligence applications for identifying a specific group of objects in remote sensing raster image data, assisted by artificial intelligence enabling learning of algorithm models. The method is characterized in that at least two sets of graphic files from different sources are used as images during the training of identifying algorithm models.

## Description

The subject of the invention is a method for identifying a specific group of objects, in particular solar panels, using a computer system equipped with memory, a computing unit, input-output devices, a display screen, and an operating system installed in the memory adapted for processing graphic files and launching artificial intelligence applications for identifying a specific group of objects in remote sensing raster image data, assisted by artificial intelligence enabling learning of algorithm models.

Effective identification of photovoltaic cells and solar panels is crucial from the perspective of real estate market analysts during the property appraisal process regarding its environmental impact. How a property affects the environment determines whether it can be classified as a so-called "green property/mortgage". "Green properties", due to their character, are more promoted in mortgage and investment processes and constitute an attractive position in improving the quality of the property portfolio.

Methods for data analysis and image analysis using computer devices are known in the prior art. The US patent description US5060278 discloses an image recognition device comprising:
- means for entering image data and a set of training data,
- a neural network system containing neural networks,
wherein each of the neural networks receives data from the means for entering data into each of the neural networks, is assigned one or more appropriate identifying classes, and has only two output units. The neural networks are trained using training data belonging to all identified classes.

The US patent description US6317517 also discloses a method for statistically performing image recognition in a dataset comprising preliminary dimensioning, containing the steps of feature selection in the dataset to determine specified features. Image recognition involves a dataset with selected features to determine the recognized image and derive the recognized image.

The method of using a computer system for identifying a specific group of objects in remote sensing raster image data, disclosed in the US patent description US11308714, involves obtaining in the computer system an aerial photograph of a property that contains a first visual indicator on a subsequent aerial photograph and identifies a property line boundary; utilizing a deep, fully convolutional network (ConvNet) for roof detection on the photograph (DFCN), configured and trained to predict the presence of building roofs in aerial imagery, to track whether any building roofs are within the property line boundary based on the aerial photograph; and applying a second visual indicator to the aerial image to identify and outline a building roof on the aerial image identified by the deep, fully convolutional building roof network. In some implementations, other convolutional networks are used to predict other attributes and features of the property.

The description discloses an exemplary implementation of a computer system configured for the automated identification of attributes and physical properties based on aerial photographs of properties. In other implementations, based on supplied aerial images for each property, the computer system can identify the presence, differentiate and identify on the aerial photograph outlines of any building roofs, above-ground pools, trampolines, skylights, solar panels, and/or roof-penetrating vegetation. Further, in yet other implementations, for each physical feature, the computer system based on aerial images of the property is configured to classify any roof-penetrating vegetation, roof condition, roofing materials, and/or roof types.

The prior art also discloses many solutions enabling computer automation of processes for standardizing image parameters, even when aerial photographs are taken from different heights, e.g., by drones, airplanes, or satellites, and cover areas of different sizes, have different scales and resolutions, and only after performing cropping operations, increasing resolution (upsampling), the actual process of identifying a specific group of objects, in particular solar and photovoltaic panels, in remote sensing image data is performed, assisted by artificial intelligence during the training of identifying algorithms.

Methods for increasing image resolution (upsampling) of individual images are commonly known. This problem is addressed by several graphic programs containing interpolation algorithms. Interpolation is the process of creating non-existent image points based on parameters of actual pixels neighboring it that created the low-resolution image. However, the effects of applying interpolation are not satisfactory. After processing the image, pixels are visible, and images look bad. Therefore (according to information on the website https://www.crazynauka.pl/super-rozdzielczosc-sposob-na-powiekszanie-malych-zdjec/), scientists use other techniques to increase resolution. One of them is combining multiple images into one, but with a minimum resolution four times higher - digital cameras and mobile phones use a similar mechanism of noise reduction and improving photos taken in poor lighting conditions. Another method of increasing image resolution is SISR (*Single Image Super Resolution*), i.e., a technique for obtaining a super image from a single input image.

So far, the identification of objects in aerial photographs has been done in the following way:
- manual with the use of an operator who visually assessed a specific property,
- automatic using algorithms based on single datasets.

In the case of a manual process using an operator, the main problems are:
- a time associated with obtaining information,
- difficulties with scaling the solution - to increase process efficiency, it was necessary to hire more people.

Additionally, the quality of the manual process depends on the skills and momentary condition of the operator, and the results are not objective - different people evaluate the same property in different ways.

In the case of an automated process using a single data source, the drawbacks include:
- the increased cost of obtaining data from the assumed source,
- lack of availability of data from current acquisition,
- discontinuation of acquisition for a given recorder.

Reliance on one data type can consequently lead to an increase in the cost of the process or its complete suspension.

During trials and research, it was unexpectedly found that the use of hybrid - multi-source datasets (created by combining datasets from different sources) during training of algorithms for identifying objects (e.g., solar panels and photovoltaic cells) allows for achieving higher prediction accuracy than algorithms trained on single datasets.

Additionally, using a hybrid (multi-source) dataset during model training later allows for predicting the occurrence of sought objects in images originating from any sources within the hybrid dataset. This approach makes it possible to make the process independent of a single input data source.

The technical problem to be solved was to develop a new method for identifying a specific group of small objects in aerial images by increasing the resolution of the examined images, lowering the costs of acquiring images, and using images obtained from various suppliers.

The method for identifying a specific group of objects has been solved using a computer system equipped with memory, a computing unit, input-output devices, a display screen, and an operating system installed in the memory adapted for processing graphic files and launching artificial intelligence applications for identifying a specific group of objects in remote sensing raster image data, assisted by artificial intelligence enabling learning of algorithm models.

According to the invention, the essence of the method is that during the training of identifying algorithm models, at least two sets of graphic files from different sources are used as images.

Preferably, combined remote sensing raster image data with different resolutions, obtained from different altitudes, using different types of recorders, are used as multi-source graphic files.

Preferably, remote sensing raster image data obtained from different altitudes, using different types of recorders and with different resolutions, are processed in an upsampling process to a uniform resolution of 512 x 512 pixels and then combined as hybrid datasets.

Preferably, solar panels are the identified objects in the remote sensing raster image data from several different sources within the hybrid dataset.

Preferably:
- the pre-processed image data is subjected to a process of standardization and combining image data using upsampling and bicubic interpolation algorithm,
- then, the obtained hybrid dataset in the form of RGB images in TIF format with a resolution of 512 x 512 pixels is processed with an appropriate algorithm,
- NasNetLarge neural network trained on ImageNet data is used as the classification algorithm.
- the NasNetLarge neural network is combined with a newly programmed classification module, and the algorithm is allowed to modify all the weights of the entire network, using the *fine-tuning* technique, to obtain a resulting .CSV file with the binary prediction of the presence of solar panels.

The subject of the invention will be explained in more detail in the embodiment example shown in the drawing, where Fig. 1 shows in simplified form a computer system for identifying a specific group of objects in remote sensing raster image data, Fig. 2 and Fig. 3 show sources for obtaining remote sensing raster image data, which correspond to the characteristics of datasets included in the hybrid dataset, Fig. 4 shows the process of cropping the source image to the vector object extent, Fig. 5 shows the process of standardizing the pre-processed data into a standardized dataset, Fig. 6 shows the labeling of processed data by an operator, Fig. 7 shows training the target image classification algorithm, Fig. 8 shows prediction of the trained model, and Fig. 9 shows the final configuration of the trained model.

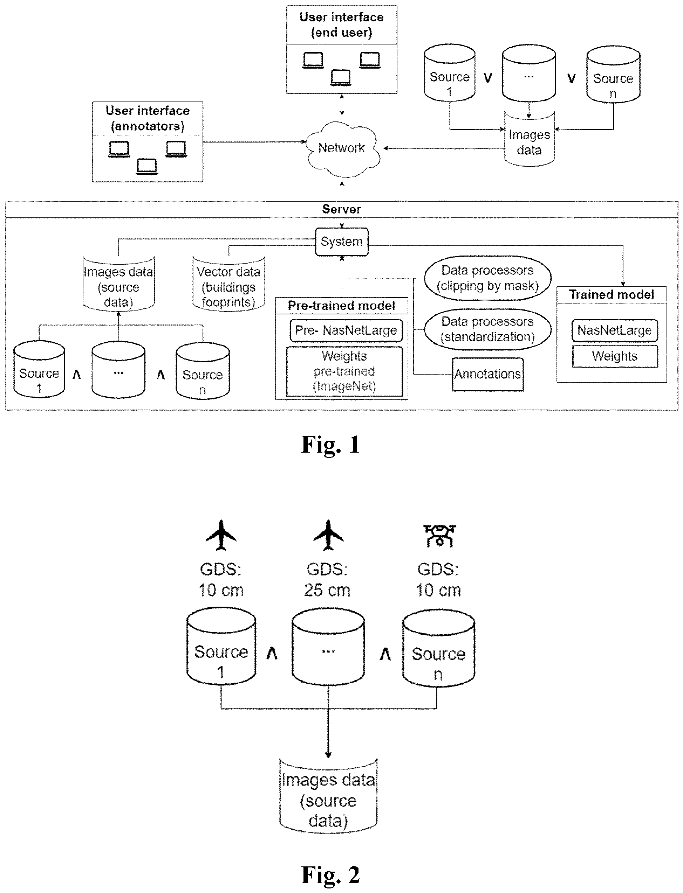

The method for identifying a specific group of objects in remote sensing raster image data using the computer system shown schematically in Fig. 1 is performed by:
- loading image (raster) data,
- transforming image data into a form used during training, evaluation, and prediction of the model,
- training an algorithm for identifying a specific group of objects (solar/photovoltaic panels) on sets of remote sensing raster data/image classification,
- launching the image data classification algorithm, as a result of which information is obtained about the occurrence in the images of sought objects (solar/photovoltaic panels).

The method for identifying a specific group of objects in remote sensing raster image data using the computer system shown schematically in Fig. 1, equipped with:
- user interface for the end user (*Fig. 1**, User interface (end user*/*client)*), which allows browsing the results of object identification in the remote sensing dataset,
- interface for annotation/label database operators *(**Fig. 1**, User interface (label database operator)*)*,* which allows flagging pre-processed photos for algorithm training purposes (*Fig. 1**, Labels),*
- compute server (*Fig. 1**, Server*), which enables:
   A - storing:
      - source data included in the hybrid dataset (*Fig. 1**, Image data (source data)*)*,*
      - vector data representing building footprints (*Fig. 1**, Vector data (building footprints)*)*,*
      - reference labels for training and evaluating the model (*Fig. 1**, Labels*),
      - pre-trained model (*Fig. 1**, Pre-trained model*),
      - trained model (*Fig. 1**, Trained model*),
      - Data processing algorithms (*Fig. 1**, Data processing algorithms (cropping to mask)* and *Fig. 1**, Data processing algorithms (standardization))*
   B - data processing:
      - model training based on reference labels *(**Fig. 1**, Labels)* and pre-trained model *(**Fig. 1**, Pre-trained model)*
      - data processing for model training and prediction (*Fig. 1**, Data processing algorithms (cropping to mask)* and *Fig. 1**, Data processing algorithms (standardization)*)
      - prediction using the trained model (*Fig. 1**, Trained model*) and data sources (*Fig. 1**, Image data*) corresponding to the characteristics of data included in the hybrid dataset (*Fig. 1**, Image data (source data)*).

The method for identifying a specific group of objects in remote sensing raster image data using the computer system shown schematically in Fig. 1 uses a hybrid dataset during model training, which is a combination of remote sensing image data with different resolutions, obtained from different altitudes, using different types of recorders. The hybrid dataset should consist of at least two datasets *(**Fig. 2**, source 1, source* ..., *source n),* e.g.:
- orthophoto map with GSD = 0.10 m acquired from aerial altitude (source 1),
- orthophoto map with GSD = 0.25 m acquired from aerial altitude (source 2),
- orthophoto mosaic with GSD = 0.10 m acquired from drone altitude (source 3).

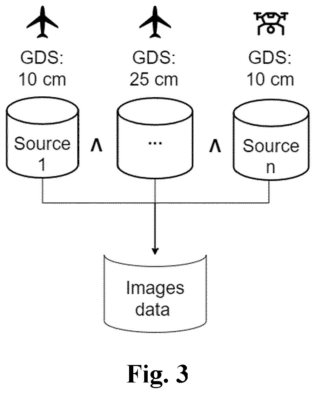

The trained algorithm (NasNetLarge neural network) implemented in the system allows its use in production on data from any source that corresponds to the characteristics of datasets included in the hybrid dataset (*Fig. 3**, source 1, source* ..., *source n*), e.g., source 1 or source 2 or source 3.

The method for identifying a specific group of objects in remote sensing raster image data using the computer system is shown schematically in Fig. 1, which executes a machine learning algorithm using appropriately prepared image data, resulting from processing the source image data. Data transformation processes are necessary for data used for algorithm training and data used during prediction.

During the operation of the computer system, remote sensing raster image data is subjected to the following processing:
- preparation of images showing roof surfaces for individual buildings (initial data processing),
- unifying data resolution and format (data standardization process).

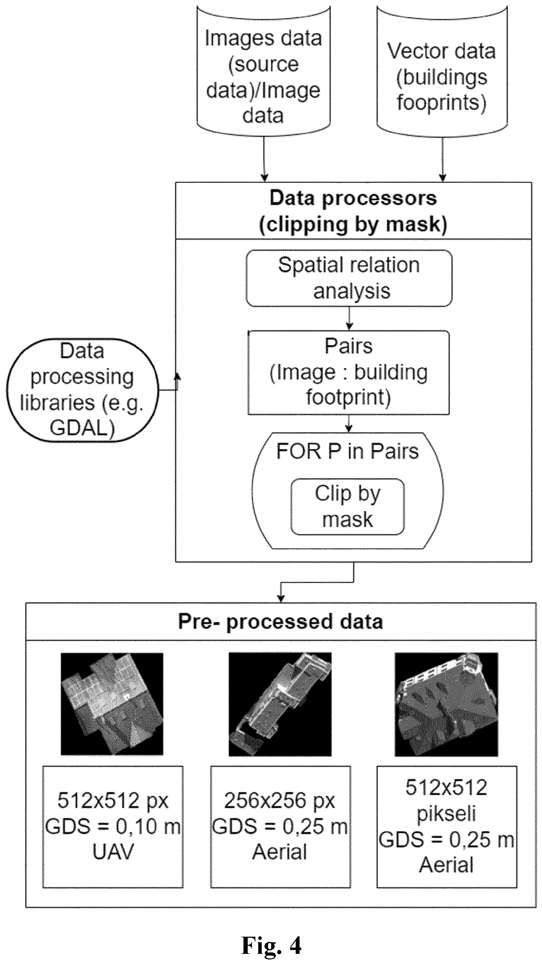

As part of initial processing, pairs (source image: building) are identified for which the following condition is met - the building is fully contained within the image extent (*Fig. 4**, analysis of spatial relationships*). For each identified pair, the source image is cropped to the vector object extent *(**Fig. 4**, Cropping image to mask extent).* This results in a pre-processed image *(**Fig. 4**, pre-processed data)* characterized in that:
- its extent matches the building footprint,
- pixels that do not intersect the geometry representing the building take on the noData value.

The process is automated in a computer/server environment using image processing libraries (*Fig. 4**, Data processing algorithms*), e.g., GDAL.

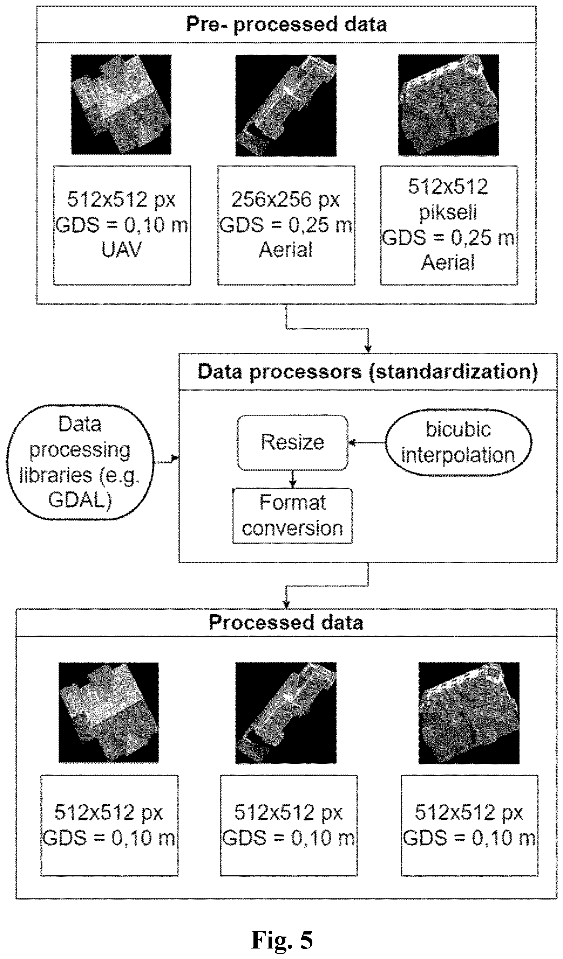

During the standardization process, the pre-processed data (*Fig. 5**, preprocessed data*) is transformed (*Fig. 5**, data processing algorithms (standardization)*) into a standardized dataset. The upsampling process uses the bicubic interpolation algorithm. As part of this task, a set of RGB images is created in TIF format with a specific resolution - 512x512 pixels *(**Fig. 5**, processed data).* The process is performed in a computer/server environment.

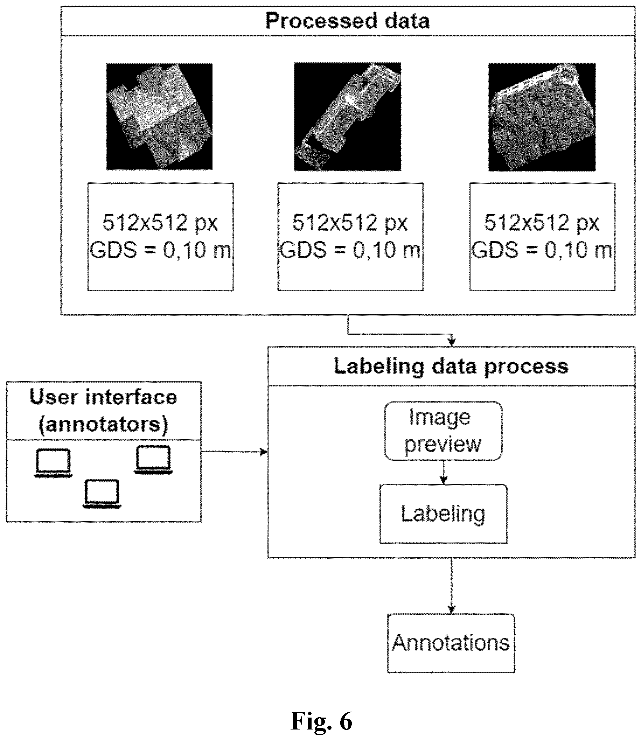

The method for identifying a specific group of objects in remote sensing raster image data using the computer system shown schematically in Fig. 1, in which a module for labeling processed data by an operator *(**Fig.* 6) has been implemented for model training and evaluation - the operator (*Fig. 6**, label database operator*) can preview the data (*Fig. 6**, preview of image data*) and indicate the label value (*Fig. 6**, labeling*):
- value 1 - indicates the object is present in the image,
- value 0 - indicates its absence.

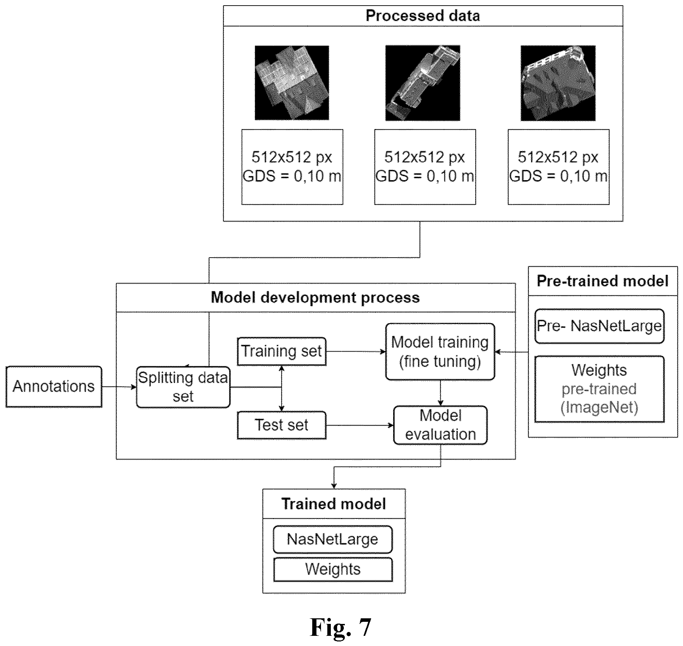

The following were used for training the target image data classification algorithm:
- NasNetLarge neural network trained on ImageNet data, which contained the initial algorithm weights (*Fig. 7**, pre-trained model*).
- dataset consisting of labels/reference classification (*Fig. 7**, labels*) and image data resulting from processing the source image data *(**Fig. 7**, processed data).*

The following steps are performed during the model-building process:
- splitting the dataset into training and test sets *(**Fig. 7**, splitting the dataset).*
- training the model based on the training dataset and parameters of the pre-trained NesNetLarge network on ImageNet data. The fine-tuning technique is used during training *(**Fig. 7**, model training (fine tuning)*).
- evaluating the model by comparing the prediction results of the trained model on the test set data with the reference classification *(**Fig. 7**, model evaluation).*

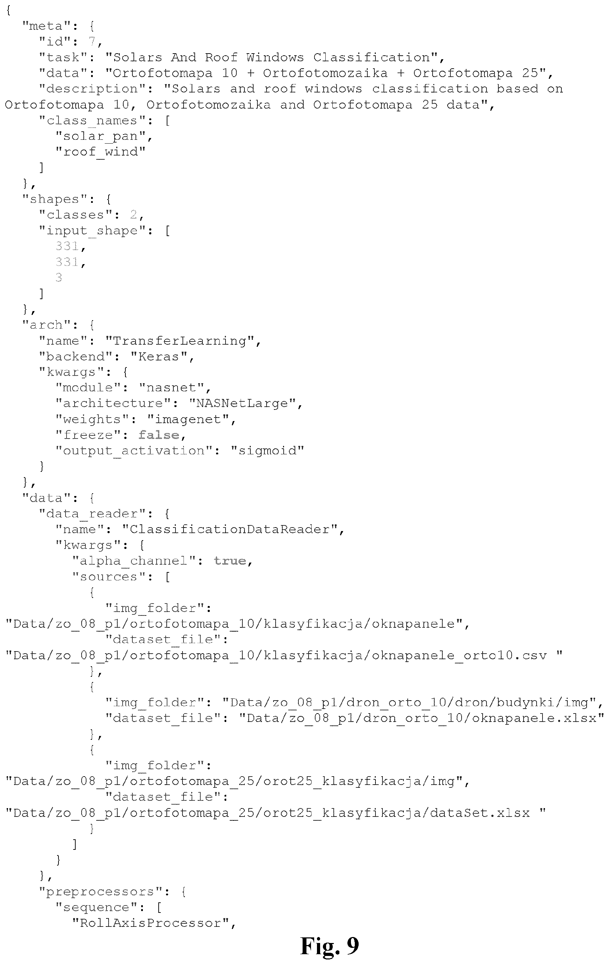

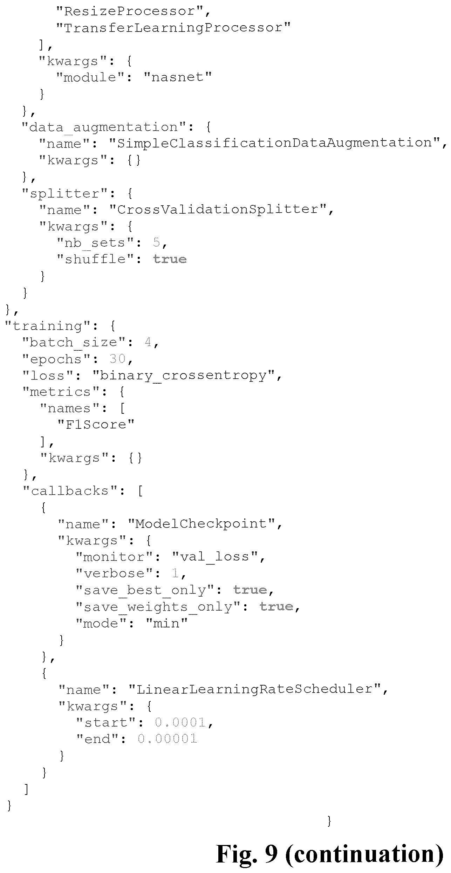

The configuration of the final model is shown in the diagram in Fig. 9.

The method for identifying a specific group of objects in remote sensing raster image data using the computer system shown schematically in Fig. 1 contains an innovative system developed for prediction (data classification) that allows loading image data (*Fig.1**, Image data*) whose characteristics correspond to the parameters of at least one of the data sources (*Fig. 1**, Image data (source data)*) included in the hybrid dataset on which the final model was trained (*Fig 1**. Trained model*).

After loading the data *(**Fig.* 3), the system transforms it into a specific form by performing the operations:
- cropping data to vector mask (*Fig.* 4), resulting in images clipped to building outlines
- standardizing data (*Fig. 5*) to a specific format and resolution.

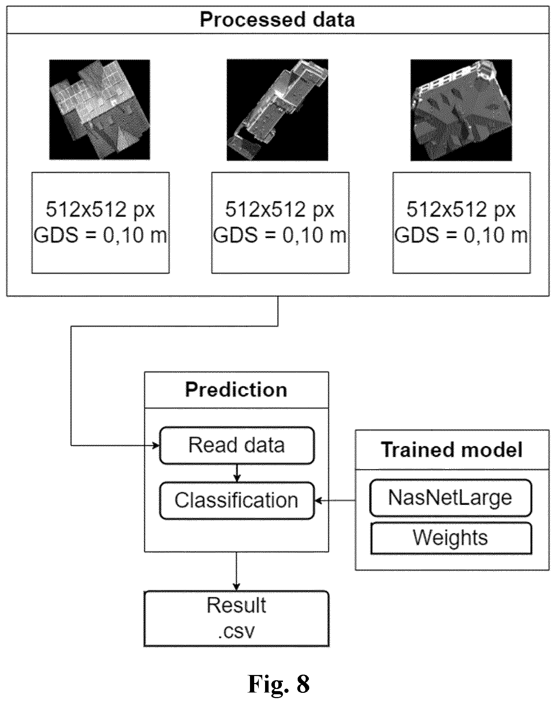

Then the prediction module is launched based on the previously trained model (*Fig. 8**, trained model*). As a result of the model operation, the processed images *(**Fig. 8**, processed data)* are classified *(**Fig. 8**, classification),* and information is determined for each of them whether solar panels/photovoltaic cells are visible in the photo. The classification result is saved to a .csv file *(**Fig. 8**, .csv result)* containing a summary consisting of:
- image name,
- prediction result:
- value 1 means the sought object has been identified in the given image,
- value 0 - indicates the object is not present in the image.

To verify the effectiveness of the invention, a comparison of the results of algorithms for identifying photovoltaic cells and solar panels on buildings was carried out, which were trained using different datasets.

The tests utilized:
- a hybrid - multi-source dataset that integrated the following image data:
   ∘ 512x512px from dividing an orthophoto map with GSD = 0.10 m, acquired from an aerial altitude,
   ∘ 256x256px from dividing an orthophoto map with GSD = 0.25 m, acquired from an aerial altitude,
   ∘ 512x512px from dividing an orthophoto mosaic with GSD = 0.10 m, acquired from a drone altitude;
- classic (single-source) datasets:
   ∘ Orthophoto mosaic with GSD = 0.10 m,
   ∘ Orthophoto map with GDS = 0.10 m,
   ∘ Orthophoto map with GDS = 0.25 m.

The tests showed that using a hybrid (multi-source) dataset improved prediction accuracy significantly.

Below are the results for methods whose results exceeded the minimum expected accuracy threshold - F1 Score >= 0.8.

| **Data set** | **Model** | **Class** | **F1 Score** |
|---|---|---|---|
| Orthophoto mosaic 10 | FELZENSZWALB | *SOLAR_PANEL* | 0.801 |
| Hybrid data set | NasNetLarge | *SOLAR_PANEL* | 0.98 |

The trained network allowed for achieving results at the F1 Score = 0.98.

Output data structure:
- CSV file with binary prediction of the presence of a roof window.

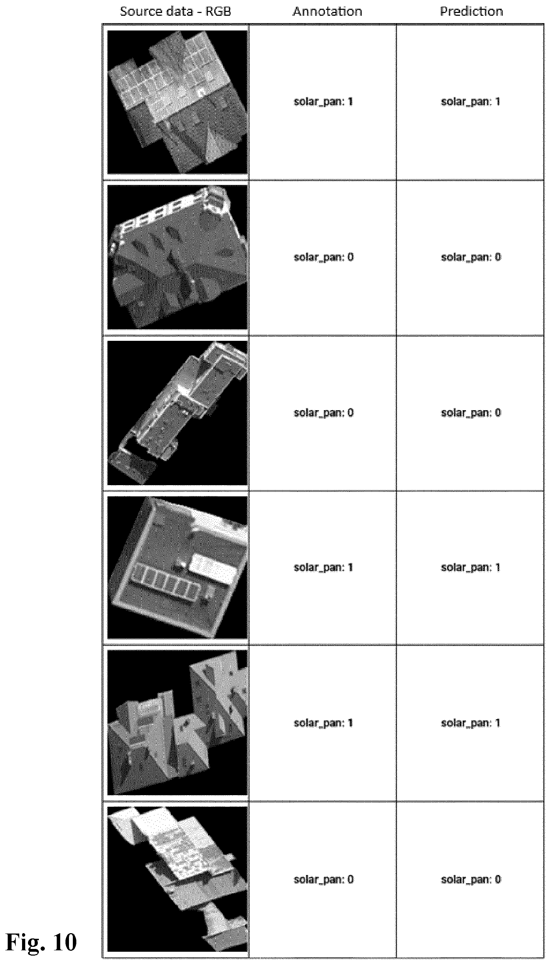

A visualization of sample results for test data is presented in Fig. 10.

## Claims

1. A method for identifying a specific group of objects using a computer system equipped with memory, a computing unit, input-output devices, a display screen, and an operating system installed in the memory adapted for processing graphic files and launching artificial intelligence applications for identifying a specific group of objects in remote sensing raster image data, assisted by artificial intelligence enabling learning of algorithm models, **characterized in that** during the training of identifying algorithm models, at least two sets of graphic files from different sources are used as images.

2. The method of Claim 1, **characterized in that** the combined remote sensing raster image data with different resolutions, obtained from different altitudes, using different types of recorders, are used as multi-source graphic files.

3. The method of Claim 2, **characterized in that** the remote sensing raster image data obtained from different altitudes, using different types of recorders and with different resolutions, are processed in an upsampling process to a uniform resolution of 512 x 512 pixels and then combined as hybrid datasets.

4. The method of Claims 1 to 3, **characterized in that** the solar panels are the objects identified in the remote sensing raster image data from several different sources within the hybrid dataset.

5. The method of Claim 4, **characterized in that**:
- the pre-processed image data is subj ected to a process of standardization and combining image data using upsampling and bicubic interpolation algorithms,
- then the obtained hybrid dataset in the form of RGB images in TIF format with a resolution of 512 x 512 pixels is processed with an appropriate algorithm,
- NasNetLarge neural network trained on ImageNet data is used as the classification algorithm.
- the NasNetLarge neural network is combined with a newly programmed classification module, and the algorithm is allowed to modify all the weights of the entire network, using the *fine-tuning* technique, in order to obtain a resulting .CSV file with the binary prediction of the presence of solar panels.
